(19) Europäisches Patentamt / European Patent Office / Office européen des brevets

(11) **EP 4 195 349 B1**

(12) **EUROPEAN PATENT SPECIFICATION**

(45) Date of publication and mention
of the grant of the patent:
**24.07.2024   Bulletin 2024/30**

(21) Application number: **21945364.4**

(22) Date of filing: **15.10.2021**

(51) International Patent Classification (IPC):
*H01M 10/0525* (2010.01)    *H01M 4/13* (2010.01)
*H01M 4/131* (2010.01)    *H01M 4/134* (2010.01)
*H01M 4/133* (2010.01)    *H01M 4/36* (2006.01)
*H01M 4/485* (2010.01)    *H01M 4/48* (2010.01)
*H01M 4/587* (2010.01)    *H01M 4/02* (2006.01)
*H01M 10/052* (2010.01)

(52) Cooperative Patent Classification (CPC):
**H01M 10/0525; H01M 4/13; H01M 4/131;
H01M 4/133; H01M 4/134; H01M 4/36;
H01M 4/366; H01M 4/483; H01M 4/485;
H01M 4/587; H01M 10/052;** H01M 2004/021;
H01M 2004/027; Y02E 60/10

(86) International application number:
**PCT/CN2021/123995**

(87) International publication number:
**WO 2023/060534 (20.04.2023 Gazette 2023/16)**

(54) **SECONDARY BATTERY**

SEKUNDÄRBATTERIE

BATTERIE SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.06.2023   Bulletin 2023/24**

(73) Proprietor: **Contemporary Amperex Technology
Co., Limited
Ningde, Fujian 352100 (CN)**

(72) Inventors:
• **GUO, Suogang**
**Ningde, Fujian 352100 (CN)**
• **FU, Chenghua**
**Ningde, Fujian 352100 (CN)**
• **ZHANG, Chenchen**
**Ningde, Fujian 352100 (CN)**
• **YE, Yonghuang**
**Ningde, Fujian 352100 (CN)**

(74) Representative: **Behr, Wolfgang
Lorenz Seidler Gossel
Rechtsanwälte Patentanwälte
Partnerschaft mbB
Widenmayerstraße 23
80538 München (DE)**

(56) References cited:
CN-A- 101 662 015    CN-A- 103 746 139
CN-A- 109 950 470    CN-A- 110 660 955
CN-A- 113 437 250    JP-A- 2010 272 357
JP-A- 2015 011 922

**Description**

**Technical Field**

The invention relates to the field of batteries, and in particular to a secondary battery, a battery module, a battery pack and a power consuming device.

**Background Art**

In recent years, with the increasing application range of secondary batteries, secondary batteries are widely used in energy storage power systems such as hydroelectric, thermal, wind and solar power stations, as well as electric tools, electric bicycles, electric motorcycles, electric vehicles, military equipment, aerospace and other fields. Due to the great development of secondary batteries, higher requirements have also been placed on the secondary batteries in terms of energy density, cycle performance, safety performance, etc.

However, lithium dendrites generated during the use of secondary batteries, especially lithium-ion secondary batteries, will puncture a separator, thereby causing shortcircuits, and resulting in unsafe phenomena such as battery burning, explosion, and scrapping. Therefore, there is an invention in the prior art that a coating is provided on a separator of a battery to avoid puncturing the separator after the rapid growth of lithium dendrites. However, during the actual battery use, the tension of the separator is relatively large, and in the process of puncturing the separator by lithium dendrites, the separator may be ruptured and the coating on the surface is broken, making it ineffective. Furthermore, there is also a problem that the lithium storage amount of the material of the coating is low.

In order to prevent lithium evolution during the use of a battery, one solution in the prior art is to use a design in which the capacity of the positive electrode of the battery is smaller than that of the negative electrode of the battery. Although setting the capacity ratio of the positive and negative electrodes in this way can avoid lithium evolution, it will result in a thicker cell thickness, which will seriously reduce the energy density of the battery. Therefore, the existing battery structure still needs to be improved.

**Summary of the Invention**

The present application has been made in view of the above-mentioned problems, and an objective thereof is to provide a secondary battery which can not only improve the energy density but also solve the problem of lithium evolution.

In order to achieve the above objective, the present application provides a secondary battery and a battery module comprising the secondary battery, a battery pack comprising the battery module, and a power consuming device, as described below.

A first aspect of the present application provides a secondary battery comprising a positive electrode plate and a negative electrode plate, wherein the negative electrode plate comprises a negative electrode current collector and a negative electrode active material layer provided on at least one surface of the negative electrode current collector, an insulation layer and a reaction layer are sequentially provided on the surface of the negative electrode active material layer on the side opposite to the negative electrode current collector side, and the reaction layer comprises at least one of graphite, silicon, silicon oxide, silicon suboxide, tin oxide, copper oxide, and zinc oxide, and when the capacity of the positive electrode active material layer per unit area in the positive electrode plate is denoted as A1, and the capacity of the negative electrode active material layer per unit area in the negative electrode plate is denoted as B1, B1/A1 < 1, optionally $0.3 \leq B1/A1 \leq 1$, more optionally $0.5 \leq B1/A1 \leq 0.91$.

Therefore, in the present application, the capacity of the positive electrode active material layer per unit area in the positive electrode plate is larger than the capacity of the negative electrode active material layer per unit area in the negative electrode plate, such that the energy density of the battery is higher than that of the conventional battery; and a specific layer structure is provided, and particularly, an insulation layer and a reaction layer are provided on the surface of the negative electrode active material layer, such that the lithium evolution problem can be effectively prevented, thereby improving the energy density, safety and cycle performance of the secondary battery.

In any embodiment, the insulation layer comprises at least one of aluminum oxide, boehmite, zirconium oxide, titanium oxide, magnesium oxide, cobalt oxide, nickel oxide, gallium oxide, germanium oxide, yttrium oxide, strontium oxide, barium oxide, and molybdenum oxide. As a result, a barrier can be formed physically, to inhibit growth of lithium dendrites.

In any embodiment, the battery satisfies that:

$$\frac{\left(\dfrac{A1-B1}{m1}\right)}{\rho}\times 10000 \qquad -15 \le d \le \qquad \frac{\left(\dfrac{A1-B1}{m1}\right)}{\rho}\times 10000 \; + 20$$

d: the thickness of the reaction layer, in $\mu$m;
A1: the capacity of the positive electrode active material per unit area of the positive electrode plate, in mAh/cm$^2$;
B1: the capacity of the negative electrode active material per unit area of the negative electrode plate, in mAh/cm$^2$;
m 1: the gram capacity of the reaction layer, in mAh/g;
$\rho$: the density of the reaction layer, in g/cm$^3$.

By satisfying the thickness of the reaction layer and the capacities of the active material layer per unit area in the positive electrode plate and negative electrode plate with the above relationships, the reaction layer can fully absorb the lithium dendrites passing through the insulation layer, thereby ensuring the safety and cycle performance of the secondary battery.

In any embodiment, the gram capacity m1 of the reaction layer satisfies m1 $\ge$ 150 mAh/g, optionally 1000 mAh/g $\le$ m1 $\le$ 2500 mAh/g. Thereby, lithium dendrites can be better absorbed, and the volume occupied by the reaction layer is reduced.

In any embodiment, the density $\rho$ of the reaction layer satisfies 0.2 g/cm$^3$ $\le$ $\rho$ $\le$ 3 g/cm$^3$, optionally 1 g/cm$^3$ $\le$ $\rho$ $\le$ 2 g/cm$^3$. Thereby, lithium dendrites can be better absorbed.

In any embodiment, the thickness of the reaction layer is 1 $\mu$m-30 $\mu$m, optionally 2 $\mu$m-30 $\mu$m, such that the volume of the battery is not increased while lithium dendrites are fully absorbed.

In any embodiment, the thickness of the insulation layer is 1 $\mu$m-10 $\mu$m, optionally 2 $\mu$m-4 $\mu$m. Thereby, the volume of the battery is not increased while the physical barrier effect is exerted.

In any embodiment, the Young's Modulus of the insulation layer is greater than or equal to 6 GPa, optionally 6 GPa -30 GPa. Thereby, the physical barrier effect can be better exerted.

In any embodiment, the particle size of the material in the reaction layer is 0.1 $\mu$m-4 $\mu$m, optionally 0.1 $\mu$m-0.8 $\mu$m; and/or the particle size of the material in the insulation layer is 0.1 $\mu$m-10 $\mu$m, optionally 0.1 $\mu$m-4 $\mu$m. Thereby, the effect of preventing lithium evolution of each of the reaction layer and the insulation layer can be better exerted.

In any embodiment, the capacity B1 of the negative electrode active material layer per unit area in the negative electrode plate is 0.3 mAh/cm$^2$-7 mAh/cm$^2$, optionally 1 mAh/cm$^2$-5 mAh/cm$^2$.

In any embodiment, the capacity A1 of the positive electrode active material layer per unit area in the positive electrode plate is 1 mAh/cm$^2$-7 mAh/cm$^2$, optionally 2 mAh/cm$^2$-5 mAh/cm$^2$. Thereby, the energy density of the battery can be improved.

A second aspect of the present application provides a battery module comprising the secondary battery of the first aspect of the present application.

A third aspect of the present application provides a battery pack comprising the battery module of the second aspect of the present application.

A fourth aspect of the present application provides a power consuming device comprising at least one selected from the secondary battery of the first aspect of the present application, the battery module of the second aspect of the present application, or the battery pack of the third aspect of the present application.

The present application achieves the following technical effects:
preventing lithium dendrites formed after lithium evolution during the use of a battery from puncturing a separator, resulting in a short-circuit failure of the battery. Specifically, when lithium dendrites are formed by lithium evolution in a cell, the insulation layer can form a barrier physically to inhibit the growth of the lithium dendrites, and when the lithium evolution amount is too large, after the lithium dendrites penetrate the insulation layer, the reaction layer can react with the same to ablate the part of the lithium dendrites that passes through the insulation layer.

In addition, the two coatings on the negative electrode, namely the insulation layer and the reaction layer, can prevent failures caused by battery manufacturing defects, for example, inward insertion of tabs, folding of plates, accidental falling of dust particles, and the like. Specifically, when the tabs are folded, the insulation layer and the reaction layer can function to increase the short-circuit resistance, which prevents an aluminum foil in the positive electrode and dust particles from contacting the negative electrode active material layer.

The design in which the capacity of the positive electrode is larger than that of the negative electrode used in the present application can improve the energy density; however, if the above coatings are not added, the design will fail due to the formation of lithium dendrites, and after the above coatings are added, the design can be used safely.

The two coatings provided on the negative electrode in the present application have a synergistic effect, where the dendrite-suppressing effect of the insulation layer can prevent the reaction layer from conducting electricity at the beginning, resulting in capacity loss, and the combination of the both makes the reaction layer react with only the dendrites that emerge and pose a risk, which improves the safety performance of the battery, and finally a battery with both high energy density and high safety is obtained.

**Brief Description of the Drawings**

Fig. 1 is a schematic diagram of a layer structure of a negative electrode of a secondary battery according to an embodiment of the present application.
Fig. 2 is a photograph of a layer structure of a negative electrode of a secondary battery according to an embodiment of the present application, where (a) is an X-ray energy spectrum (EDS) image of the negative electrode layer structure, and (b) is a scanning electron microscope ( SEM) image of the negative electrode layer structure.
Fig. 3 is a schematic diagram of a secondary battery according to an embodiment of the present application.
Fig. 4 is an exploded diagram of the secondary battery according to the embodiment of the present application as shown in Fig. 3.
Fig. 5 is a schematic diagram of a battery module according to an embodiment of the present application.
Fig. 6 is a schematic diagram of a battery pack according to an embodiment of the present application.
Fig. 7 is an exploded view of the battery pack according to the embodiment of the present application as shown in Fig. 6.
Fig. 8 is a schematic diagram of a power consuming device using a secondary battery according to an embodiment of the present application as a power source.

List of reference numerals:

1 Battery pack; 2 upper box body; 3 lower box body; 4 battery module; 5 secondary battery; 51 housing; 52 electrode assembly; 53 top cover assembly; 500 negative electrode current collector; 501 negative electrode active material layer; 502 insulation layer; and 503 reaction layer.

**Detailed Description of Embodiments**

Hereafter, embodiments of a secondary battery, a battery module, a battery pack and a power consuming device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.
"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of $\geq 2$, it is equivalent to disclosing that the parameter is, for example, an integer of 2, 3, 4, 5, 6, 7, 8, 9, 10, 11, 12, and the like.
All the embodiments and optional embodiments of the present application can be combined with one another to form new technical solutions, unless otherwise stated.
All technical features and optional technical features of the present application can be combined with one another to form a new technical solution, unless otherwise stated.
Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), steps (a), (c) and (b), and also steps (c), (a) and (b), etc.

The terms "comprise" and "include" mentioned in the present application are openended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

In one embodiment of the present application, a secondary battery comprising a positive electrode plate and a negative electrode plate is provided, wherein the negative electrode plate comprises a negative electrode current collector and a negative electrode active material layer provided on at least one surface of the negative electrode current collector, an insulation layer and a reaction layer are sequentially provided on the surface of the negative electrode active material layer on the side opposite to the negative electrode current collector side, and the reaction layer comprises at least one of graphite, silicon, silicon oxide, silicon suboxide, tin oxide, copper oxide, and zinc oxide, and when the capacity of the positive electrode active material layer per unit area in the positive electrode plate is denoted as A1, and the capacity of the negative electrode active material layer per unit area in the negative electrode plate is denoted as B1, B1/A1 < 1.

In some embodiments, $0.3 \leq B1/A1 < 1$, for example, $0.5 \leq B1/A1 \leq 0.91$. The design can be made according to customer requirements, and for example, if the usage scenario is high battery service life, but a long cycle is not required, a design with extremely low B1/A1 may be used. The B1/A1 value is related to the theoretical gram capacity of positive and negative electrode active materials, the coating thickness of positive and negative electrodes, and the proportion of active materials, and the like.

In terms of battery design, in order to prevent lithium evolution during battery use, the capacity ratio of the positive and negative electrodes of a battery generally needs to be less than a certain value to ensure that during normal use, the battery does not undergo obvious lithium evolution, resulting in battery failure. Although setting the capacity ratio of the positive and negative electrodes in this way can avoid lithium evolution, it will result in a thicker cell thickness, which will seriously reduce the energy density of the battery.

In contrast to conventional batteries, in the present application, the capacity of the positive electrode active material layer per unit area in the positive electrode plate (hereinafter sometimes also referred to as the capacity of the positive electrode) is larger than the capacity of the negative electrode active material layer per unit area in the negative electrode plate (hereinafter sometimes also referred to as the capacity of the negative electrode), and the energy density of the battery can be higher than that of a conventional battery. However, in the design in which the capacity of the positive electrode is larger than that of the negative electrode used in the present application, the battery may fail due to the formation of a large number of lithium dendrites. Further, the applicant of the present application has found that by providing a special layer structure, particularly providing an insulation layer and a reaction layer on a surface of the negative electrode active material layer, namely, a composite coating, the lithium evolution problem can be effectively prevented. In this way, for the battery of the invention, not only the improvement of the energy density of the secondary battery is achieved, but also the hidden danger in safety is solved.

In the battery of the invention, the insulation layer provided on a surface of the negative electrode active material layer acts physically to prevent lithium dendrites from puncturing the layer of the separator, and the reaction layer provided on the insulation layer acts chemically to prevent lithium dendrites from puncturing the layer of the separator. The insulation layer may be a coating applied to the surface of the negative electrode active material layer, and the reaction layer may be a coating applied to the insulation layer. After the insulation layer and the reaction layer are provided, the safety of the battery is guaranteed. A battery with the capacity of the positive electrode being greater than that of the negative electrode will undergo lithium evolution in the process of any cycle, where most of the lithium layer exists under the insulation layer, and a part of the lithium that evolutes forms lithium dendrites that puncture the insulation layer, and the lithium dendrites passing through the insulation layer will be absorbed by the reaction layer once touching the same, so that the dendrites will no longer grow.

The material that can be used in the reaction layer may be any material, as long as it can chemically react with lithium dendrites, as as to prevent lithium dendrites from puncturing the separator, and for example, the same active material as in the negative electrode active material layer may be used. Examples of such a material that reversibly reacts with lithium dendrites may include, for example, graphite, silicon, silicon oxide, silicon suboxide and the like, and particularly optionally, silicon suboxide. In addition, since the proportion of the lithium ions in the whole battery which form the lithium dendrites penetrating the insulation layer to be consumed by the reaction layer is not too much, even if the reaction layer is a material that irreversibly reacts with the lithium dendrites, it will have little effect on the capacity. Examples of such an irreversible material be for example tin may oxide, copper oxide, zinc oxide, etc., which can form LiM alloys with lithium metal, thus contributing to better deposition of lithium.

In some embodiments, the insulation layer comprises at least one of aluminum oxide, boehmite, zirconium oxide, titanium oxide, magnesium oxide, cobalt oxide, nickel oxide, gallium oxide, germanium oxide, yttrium oxide, strontium oxide, barium oxide, and molybdenum oxide. Particularly optionally, boehmite is used. By forming the insulation layer from the material comprising the above substances, a barrier can be formed physically, which prevents lithium dendrites generated during the battery use from puncturing the separator, thus ensuring the safety of the battery.

In some embodiments, the above-mentioned battery satisfies that:

$$-15 \leq d \leq \frac{\left(\dfrac{A1-B1}{m1}\right) \times 10000}{\rho} \quad \text{and} \quad \frac{\left(\dfrac{A1-B1}{m1}\right) \times 10000}{\rho} + 20$$

d: the thickness of the reaction layer, in $\mu$m;
A1: the capacity of the positive electrode active material per unit area of the positive electrode plate, in mAh/cm$^2$;
B1: the capacity of the negative electrode active material per unit area of the negative electrode plate, in mAh/cm$^2$;
m1: the gram capacity of the reaction layer, in mAh/g;
$\rho$: the density of the reaction layer, in g/cm$^3$.

By satisfying the thickness of the reaction layer and the capacities of the active material layer per unit area in the positive electrode plate and negative electrode plate with the above relationships, the reaction layer can fully absorb the lithium dendrites passing through the insulation layer, thereby ensuring the safety and cycle performance of the secondary battery, and also ensuring that the battery volume is not excessively increased.

In some embodiments, the gram capacity m1 of the reaction layer satisfies m1 $\geq$ 150 mAh/g, optionally 150 mAh/g-3000 mAh/g, more optionally 1000 mAh/g -2500 mAh/g. Thereby, lithium dendrites can be better absorbed, and the volume occupied by the reaction layer is reduced.

In some embodiments, the density $\rho$ of the reaction layer satisfies 0.2 g/cm$^3$ $\leq \rho \leq$ 3 g/cm$^3$, optionally 1 g/cm$^3$ $\leq \rho \leq$ 2 g/cm$^3$. Thereby, lithium dendrites can be better absorbed.

In some embodiments, the thickness of the reaction layer is 1 $\mu$m-30 $\mu$m, optionally 2 $\mu$m-30 $\mu$m, such that the volume of the battery is not increased while lithium dendrites are fully absorbed.

In some embodiments, the thickness of the insulation layer is 1 $\mu$m-10 $\mu$m, optionally 2 $\mu$m-4 $\mu$m. Thereby, the volume of the battery is not increased while the barrier is formed physically. The thickness of the insulation layer depends on the particle size of the material constituting the insulation layer and the process of forming the insulation layer. A certain range of thickness does not affect the cycle performance, and if the process can meet the requirements, the thinner the better, provided that complete insulation can be achieved, otherwise active lithium will be consumed initially.

In some embodiments, the Young's Modulus of the insulation layer is greater than or equal to 6 GPa, optionally 6 GPa-30 GPa. Thereby, the physical barrier effect can be better exerted. The mechanical puncture strength of lithium dendrites is 6 GPa, and in order to exert the physical barrier effect, the Young's Modulus of the insulation layer needs to be greater than or equal to 6 GPa.

In some embodiments, the particle size of the material constituting the reaction layer is 0.1 $\mu$m-4 $\mu$m, optionally 0.1 $\mu$m-0.8 $\mu$m; and/or the particle size of the material constituting the insulation layer is 0.1 $\mu$m-10 $\mu$m, optionally 0.1 $\mu$m-4 $\mu$m. Herein, the particle size of the material in the reaction layer is not larger than the thickness of the reaction layer, and the particle size of the material in the insulation layer is not larger than the thickness of the insulation layer. Thereby, the effect of preventing lithium evolution of each of the reaction layer and the insulation layer can be better exerted.

In some embodiments, the capacity of the negative electrode active material layer per unit area in the negative electrode plate is 0.3 mAh/cm$^2$-7 mAh/cm$^2$, optionally 1 mAh/cm$^2$-5 mAh/cm$^2$. In some embodiments, the capacity of the positive electrode active material layer per unit area in the positive electrode plate is 1 mAh/cm$^2$-7 mAh/cm$^2$, optionally 2 mAh/cm$^2$-5 mAh/cm$^2$. Thereby, the energy density of the battery can be improved.

A second aspect of the present application provides a battery module comprising the secondary battery of the first aspect of the present application.

A third aspect of the present application provides a battery pack comprising the battery module of the second aspect of the present application.

A fourth aspect of the present application provides a power consuming device comprising at least one selected from the secondary battery of the first aspect of the present application, the battery module of the second aspect of the present application, or the battery pack of the third aspect of the present application.

In addition, the secondary battery, battery module, battery pack, and power consuming device of the present application will be described below by appropriately referring to the accompanying drawings.

In one embodiment of the present application, a secondary battery is provided.

Typically, a secondary battery comprises a positive electrode plate, a negative electrode plate, an electrolyte and a separator. During the charge/discharge process of the battery, active ions are intercalated and de-intercalated back and forth between the positive electrode plate and the negative electrode plate. The electrolyte is located between the positive electrode plate and the negative electrode plate and functions for ionic conduction. The separator is provided between the positive electrode plate and the negative electrode plate, and mainly prevents the positive and negative electrodes from short-circuiting and enables ions to pass through.

[Positive electrode plate]

The positive electrode plate comprises a positive electrode current collector and a positive electrode active material layer provided on at least one surface of the positive electrode current collector.

As an example, the positive electrode current collector has two surfaces opposite in its own thickness direction, and the positive electrode active material layer is provided on either or both of the two opposite surfaces of the positive electrode current collector.

In some embodiments, the positive electrode current collector can be a metal foil or a composite current collector. For example, as a metal foil, an aluminum foil can be used. The composite current collector may comprise a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a positive electrode active material known in the art for batteries can be used in the positive electrode active material layer. As an example, the positive electrode active material may include at least one of the following materials: lithium-containing phosphates of an olivine structure, lithium transition metal oxides and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g. $LiCoO_2$), lithium nickel oxide (e.g. $LiNiO_2$), lithium manganese oxide (e.g. $LiMnO_2$, $LiMn_2O_4$), lithium nickel cobalt oxide, lithium manganese cobalt oxide, lithium nickel manganese oxide, lithium nickel cobalt manganese oxide (e.g. $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g. $LiNi_{0.85}Co_{0.15}Al_{0.05}O_2$), and modified compounds thereof, and the like. Examples of lithium-containing phosphates of olivine structure may include, but are not limited to, at least one of lithium iron phosphate (e.g. $LiFePO_4$ (also referred to as LFP)), lithium iron phosphate and carbon composites, lithium manganese phosphate (e.g. $LiMnPO_4$), lithium manganese phosphate and carbon composites, lithium iron manganese phosphate, and lithium iron manganese phosphate and carbon composites.

In some embodiments, the positive electrode active material layer may also optionally comprise a binder. As an example, the binder may include at least one of polyvinylidene fluoride (PVDF), polytetrafluoroethylene (PTFE), vinylidene fluoride tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer may also optionally comprise a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: the above-mentioned components for preparing the positive electrode plate, for example, positive electrode active material, conductive agent, binder and any other components, are dispersed in a solvent (e.g. N-methylpyrrolidone) to form a positive electrode slurry; and the positive electrode slurry is coated onto a positive electrode current collector, and is then subjected to procedures such as drying and cold pressing, so as to obtain the positive electrode plate.

[Negative electrode plate]

The negative electrode plate comprises a negative electrode current collector and a negative electrode active material layer provided on at least one surface of the negative electrode current collector, and an insulation layer and a reaction layer are sequentially provided on the surface of the negative electrode active material layer on the side opposite to the negative electrode current collector side.

As an example, the negative electrode current collector has two opposite surfaces in its own thickness direction, and the negative electrode active material layer is provided on either or both of the two opposite surfaces of the negative electrode current collector.

In some embodiments, the negative electrode current collector can be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material known in the art for batteries can be used in the negative electrode active material layer. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

In some embodiments, the negative electrode active material layer may also optionally comprise a binder. The binder can be a binder commonly used in the battery field, and there is no particular limitation, and the binder may be selected from at least one of styrene-butadiene rubber (SBR), polyacrylic acid (PAA), sodium polyacrylate (PAAS), polyacrylamide ( PAM), polyvinyl alcohol (PVA), sodium alginate (SA), polymethacrylic acid (PMAA) and carboxymethyl chitosan (CMCS), polyvinylidene fluoride, acryl-based polymers, diene-based polymers and natural rubber. Particularly, a polystyrene-acrylate emulsion binder can be used.

In some embodiments, the negative electrode active material layer may also optionally comprise a conductive agent. The conductive agent may be selected from at least one of superconductive carbon, acetylene black, carbon black, ketjenblack, carbon dots, carbon nanotubes, graphene, and carbon nanofibers.

In some embodiments, a dispersant may also be used in preparing the negative electrode active material layer. The dispersant is used to improve the dispersion uniformity and coating property, and can be a commonly used dispersant in the battery field, for example, a polymer dispersant. The polymer dispersant can be polyvinyl alcohol, modified polyvinyl alcohol having functional groups other than hydroxyl group, for example, acetyl group, sulfo group, carboxyl group, carbonyl group, amino group, polyvinyl alcohol-based resins modified with various salts, modified with anions or cations, and acetal-modified with aldehydes, or various (meth)acrylic-based polymers, polymers derived from ethylenically unsaturated hydrocarbons, cellulose-based resins, etc., or copolymers thereof, but is not limited to these. The polymer dispersant may be used alone or in combination of two or more.

In some embodiments, the negative electrode active material layer may also optionally comprise other auxiliary agents, for example, thickener (e.g. sodium carboxymethyl cellulose (CMC-Na)) and the like.

In some embodiments, for the reaction layer, at least one material of graphite, silicon, silicon oxide, silicon suboxide, tin oxide, copper oxide and zinc oxide may be used. For the insulation layer, at least one material of aluminum oxide, boehmite, zirconium oxide, titanium oxide, magnesium oxide, cobalt oxide, nickel oxide, gallium oxide, germanium oxide, yttrium oxide, strontium oxide, barium oxide, and molybdenum oxide may be used.

In some embodiments, the negative electrode plate can be prepared as follows: the above components for preparing the negative electrode plate, such as negative electrode active material, conductive agent, binder and any other component, are dispersed in a solvent (e.g., deionized water) to form a slurry for negative electrode material layer; the above materials for forming the insulation layer, and a dispersant, a binder and any other component, are dispersed in a solvent (e.g., deionized water) to form a slurry for insulation layer, wherein the dispersant and the binder may be the above materials listed in the negative electrode active material layer; the above materials for forming the reaction layer, and a dispersant, a binder and any other component, are dispersed in a solvent (e.g., deionized water) to form a slurry for reaction layer, wherein the dispersant and the binder may be the above materials listed in the negative electrode active material layer; and the negative electrode slurry is coated onto the negative electrode current collector and dried, and then the slurry for insulation layer and the slurry for reaction layer are applied sequentially, and subjected to procedures such as drying and cold pressing, to obtain the negative electrode plate, wherein the coating operation can also be achieved by a one-step coating forming, for example, by a double-layer microgravure device on an extrusion coater; or by a multi-layer coater.

[Electrolyte]

The electrolyte is located between the positive electrode plate and the negative electrode plate and functions for ionic conduction. The type of the electrolyte is not specifically limited in the present application, and can be selected according to actual requirements. For example, the electrolyte may be liquid, gel or all solid.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may optionally comprise an additive. For example, the additive can include a negative electrode film-forming additive, a positive electrode film-forming additive, and also an additive that can improve certain performances of the battery, such as an additive that improve the overcharge performance of the battery, or an additive that improve the high temperature performance or low-temperature performance of the battery.

[Separator]

In some embodiments, the secondary battery further comprises a separator. The type of the separator is not particularly limited in the present application, and any well known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be a single-layer film and also a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a laminating process.

In some embodiments, the secondary battery may comprise an outer package. The outer package can be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may include polypropylene, polybutylene terephthalate, and polybutylene succinate, etc.

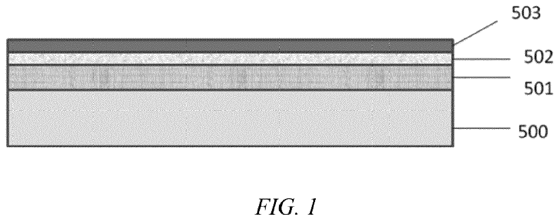

Fig. 1 is a schematic diagram of a layer structure of a negative electrode of a secondary battery according to an embodiment of the present application, and only a negative electrode current collector 500, a negative electrode active material layer 501, an insulation layer 502 and a reaction layer 503 sequentially stacked in the negative electrode are shown in Fig. 1.

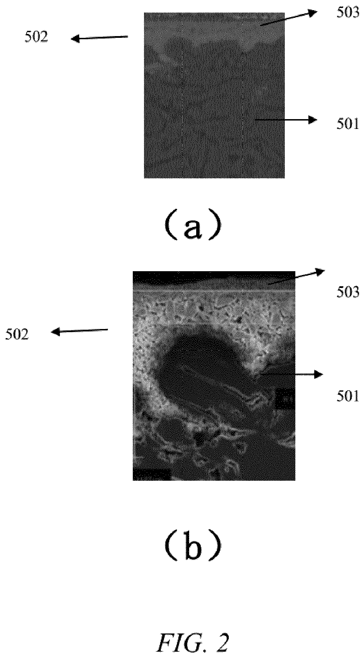

Fig. 2 is a photograph of a layer structure of a negative electrode of a secondary battery according to an embodiment of the present application. Herein, (a) is an X-ray energy spectrum (EDS) image of the negative electrode layer structure, and (b) is a scanning electron microscope ( SEM) image of the negative electrode layer structure. In (a) and (b) of Fig. 2, in order from top to bottom, the uppermost layer is the reaction layer 503, the middle layer is the insulation layer 502, and the lowermost layer is the negative electrode active material layer 501 (graphite).

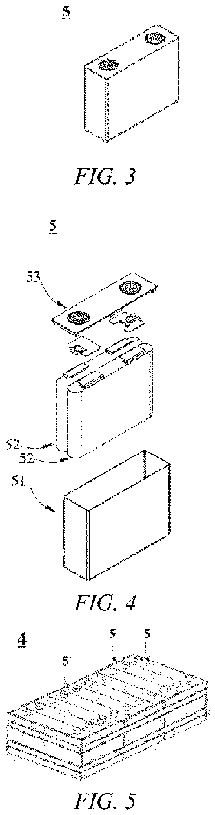

The shape of the secondary battery is not particularly limited in the present application, and may be cylindrical, square or of any other shape. For example, Fig. 3 shows a secondary battery 5 with a square structure as an example.

In some embodiments, referring to Fig. 4, the outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can form an electrode assembly 52 by a winding process or a lamination process. The electrode assembly 52 is encapsulated in the accommodating cavity. An electrolyte solution is infiltrated into the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module can be one or more, and the specific number can be selected by those skilled in the art according to the application and capacity of the battery module.

Fig. 5 shows a battery module 4 as an example. Referring to Fig. 5, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above-mentioned battery module may also be assembled into a battery pack, the number of battery modules included in the battery pack may be one or more, and the specific number can be selected by those skilled in the art according to the application and capacity of the battery pack.

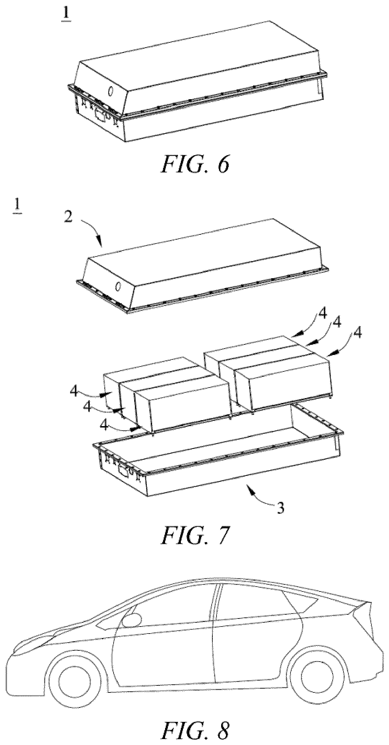

Fig. 6 and Fig. 7 show a battery pack 1 as an example. Referring to Fig. 6 and Fig. 7, the battery pack 1 may comprise a battery box and a plurality of battery modules 4 provided in the battery box. The battery box comprises an upper box body 2 and a lower box body 3, wherein the upper box body 2 can cover the lower box body 3 to form a closed space for accommodating the battery modules 4. A plurality of battery modules 4 may be arranged in the battery box in any manner.

In addition, the present application further provides a power consuming device. The power consuming device comprises at least one of the secondary battery, battery module, or battery pack provided by the present application. The secondary battery, battery module or battery pack may be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

For the power consuming device, the secondary battery, battery module or battery pack can be selected according to the usage requirements thereof.

Fig. 8 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used.

As another example, the device may be a mobile phone, a tablet, a laptop computer, etc. The device is generally required to be thin and light, and may use a secondary battery as a power source.

Examples

Hereinafter, the examples of the present application will be explained. The examples described below are exemplary and are merely for explaining the present application, and should not be construed as limiting the present application. The techniques or conditions that are not specified in examples are according to the techniques or conditions described in documents in the art or the product introduction. The reagents or instruments used, if they are not marked with the manufacturer, are common products that are commercially available.

Test methods:

(1) Test of cycle performance

The battery was repeatedly charged and discharged through the following steps, and the discharge capacity retention rate of the battery was calculated.

First, in an environment at 25°C, a first charge and discharge was performed: the battery was constant-current-charged at a charge current of 0.33C (i.e., a current value when the theoretical capacity is completely discharged over 3h), then charged with a constant voltage until the upper voltage limit was 4.25V, and then constant-current-discharged at a discharge current of 0.33C until the final voltage was 2.8V, and the discharge capacity of the first cycle was recorded. Then charge and discharge cycles were performed until the battery capacity loss rate reached 20% (i.e., the capacity retention rate was 80%), and the number of cycles at this time was recorded.

Herein, according to the formula: capacity loss rate=((discharge capacity of the first cycle - discharge capacity after N cycles)/discharge capacity of the first cycle)×100%, the capacity loss rate of the battery after N cycles was calculated.

(2) Test of volumetric energy density

The capacity of the battery was tested by charging and discharging at a small rate (0.1-0.3C), and the volumetric energy density was calculated by the following formula.

$$\text{Volumetric energy density (Wh/L)} = \text{capacity (Ah)} * \text{plateau voltage (V)} / \text{cell volume (L)}$$

Example 1

1. Preparation of secondary battery

1) Preparation of positive electrode plate:

A positive active material $LiNi_{0.8}Co_{0.1}Mn_{0.1}O_2$, superconducting carbon black SP as a conductive agent and polyvinylidene fluoride (PVDF) as a binder were dispersed in N-methylpyrrolidone (NMP) as a solvent in a mass ratio of 96:1.2:2.8 and mixed uniformly to obtain a positive electrode slurry; and the positive electrode slurry was evenly coated onto a positive electrode current collector aluminum foil, and was subjected to drying, cold pressing, slitting and cutting, so as to obtain the positive electrode plate.

2) Preparation of separator:

A polyethylene film was selected as the separator.

3) Preparation of negative electrode plate:

Preparation of slurry for insulation layer: Boehmite, a dispersant polyvinyl alcohol, and a binder polystyrene-acrylate emulsion were dispersed in deionized water as a solvent in a mass ratio of 96.5 : 0.5 : 3 and mixed uniformly. Herein, the particle size (namely, the median particle size Dv50) of the boehmite was 0.3 $\mu$m.
Preparation of slurry for reaction layer: Silicon suboxide, a dispersant polyvinyl alcohol, and a binder polystyrene-acrylate emulsion were dispersed in deionized water as a solvent in a mass ratio of 96.5 : 0.5 : 3 and mixed uniformly. Herein, the particle size (namely, the median particle size) of the silicon suboxide was 1 $\mu$m.
Preparation of slurry for negative electrode active material layer: A negative electrode active material artificial graphite, superconducting carbon black as a conductive agent, SBR as a binder, and CMC-Na as a thickener were dispersed in deionized water as a solvent in a mass ratio of 96 : 1 : 1 : 2 and mixed uniformly to obtain a negative electrode slurry.
Preparation of negative electrode plate: The slurry for negative electrode active material layer was uniformly coated on a negative electrode current collector copper foil, and after drying, the slurry for insulation layer was coated on the negative electrode active material layer, where the thickness of the insulation layer was 2 $\mu$m; after drying, the slurry for reaction layer was coated on the insulation layer, where the thickness of the reaction layer was 7 $\mu$m, and after drying, cold pressing, slitting and cutting, a negative electrode plate was obtained.

4) Preparation of electrolyte solution

Ethylene carbonate (EC), dimethyl carbonate (DMC), and diethyl carbonate (DEC) were mixed in a volume ratio of 1 : 1 : 1 into an organic solvent, and then the fully dried lithium salt $LiPF_6$ was dissolved in the mixed organic solvent, so as to prepare an electrolyte solution with a concentration of 1 mol/L.

5) Preparation of secondary battery:

The above-mentioned positive electrode plate, separator, and negative electrode plate were stacked in sequence, such that the separator was placed between the positive electrode plate and the negative electrode plate to play a role of isolation, and then winding was performed to make a cell, where the negative electrode capacity was 0.3 times the positive electrode capacity; further, after winding, hot pressing was performed for the preparation of the cell; and then, the cell was placed in an outer package shell and dried, and the electrolyte solution was injected, followed by procedures such as vacuum encapsulating, standing, forming and shaping, to obtain a secondary battery.

2. Performance test of secondary battery

The cycle performance and volumetric energy density of the obtained secondary battery were measured as described above.

Examples 2 to 23

A secondary battery was prepared as in Example 1 except that the reaction conditions were changed as shown in Table 1 and Table 2.

Herein, in Examples 2 to 11 shown in Table 1, the value of B1/A1 was changed by changing the negative electrode capacity B1, and the thickness d of the reaction layer was also changed. As shown in Table 2, in Examples 12 and 13, the type of material for insulation layer was changed; in Examples 14 and 15, the type and thickness of material for reaction layer were changed; in Examples 16 to 18, the thickness of the insulation layer was changed; and in Examples 19 to 23, the capacity A1 of the positive electrode active material layer per unit area in the positive electrode plate were changed by changing the thickness of the positive electrode active material layer, where thick coating is required, and it is difficult to achieve this for the existing process. The larger the value of A1, the higher the coating process requirements are, and if the coating is too thick, the solvent is difficult to volatilize, and thus the film is easy to crack.

Comparative Examples 1 to 6

A secondary battery was prepared as in Example 1 except that the reaction conditions were changed as shown in Table 3.

Herein, in Comparative Examples 1 to 3, the value of B1/A1 was greater than 1, and at least one of the insulation layer and the reaction layer was not provided; and in Comparative Examples 4 to 6, the value of B1/A1 was less than 1, at least one of the insulation layer and the reactive layer was not provided.

[Table 1]

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Negative electrode plate | Insulation layer | Material type | Boehmite | Boehmite | Boehmite | Boehmite | Boehmite | Boehmite | Boehmite | Boehmite | Boehmite | Boehmite | Boehmite |
| | | Thickness (μm) | 2 | 2 | 2 | 2 | 2 | 2 | 2 | 2 | 2 | 2 | 2 |
| | | Particle size (μm) | 0.3 | 0.3 | 0.3 | 0.3 | 0.3 | 03 | 0.3 | 0.3 | 0.3 | 0.3 | 0.3 |
| | Reaction layer | Material type | Silicon suboxide | Silicon suboxide | Silicon suboxide | Silicon suboxide | Silicon suboxide | Silicon suboxide | Silicon suboxide | Silicon suboxide | Silicon suboxide | Silicon suboxide | Silicon suboxide |
| | | Thickness d (μm) | 7 | 6 | 5 | 4 | 4 | 3 | 2 | 2 | 2 | 2 | 4 |
| | | Particle size (μm) | 1 | 1 | 1 | 1 | 1 | 1 | 1 | 1 | 1 | 1 | 1 |
| | | Thickness d (μm) | 2350 | 2350 | 2350 | 2350 | 2350 | 2350 | 2350 | 2350 | 2350 | 2350 | 2350 |
| | | Density $\rho$ (g/cm$^3$) | 1.82 | 1.82 | 1.82 | 1.82 | 1.82 | 1.82 | 1.82 | 1.82 | 1.82 | 1.82 | 1.82 |
| | | Capacity of positive electrode B1 (mAh/cm$^2$) | 0.68 | 1.02 | 1.36 | 1.7 | 2.04 | 238 | 2.72 | 3.06 | 3.23 | 3.332 | 2.38 |
| Positive electrode plate | | Capacity of positive electrode A1 (mAh/cm$^2$) | 3.4 | 3.4 | 3.4 | 3.4 | 3.4 | 3.4 | 34 | 3.4 | 3.4 | 3.4 | 3.4 |
| | | B1/A1 | 0.20 | 0.30 | 0.40 | 0.50 | 0.60 | 0.70 | 0.80 | 0.90 | 0.95 | 0.98 | 0.70 |

(continued)

|  |  | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Battery perfor mance | Volumetric energy density (Wh/L) | 865.4 | 817 | 766.9 | 723.9 | 684.1 | 651.3 | 621.2 | 589.2 | 571.5 | 560.4 | 651.3 |
|  | Cycle life (cycle) | 202 | 354 | 515 | 782 | 901 | 1212 | 1409 | 1613 | 1763 | 1832 | 1286 |
|  | Capacity loss rate (%) | 20 | 20 | 20 | 20 | 20 | 20 | 20 | 20 | 20 | 20 | 20 |

[Table 2]

| | | | Example 12 | Example 13 | Example 14 | Example 15 | Example 16 | Example 17 | Example 18 | Example 19 | Example 20 | Example 21 | Example 22 | Example 23 |
|---|---|---|---|---|---|---|---|---|---|---|---|---|---|---|
| Negative electrode plate | Insulation layer | Material type | Aluminum oxide | Zirconium oxide | Boehmite | Boehmite | Boehmite | Boehmite | Boehmite | Boehmite | Boehmite | Boehmite | Boehmite | Boehmite |
| | | Thickness ($\mu$m) | 2 | 2 | 2 | 2 | 2 | 4 | 6 | 2 | 2 | 2 | 2 | 2 |
| | | Particle size ($\mu$m) | 0.3 | 0.3 | 0.3 | 0.3 | 0.5 | 0.3 | 0.3 | 0.3 | 0.3 | 0.3 | 0.3 | 0.3 |
| | Reaction layer | Material type | Silicon suboxide | Silicon suboxide | Silicon | Graphite | Silicon suboxide | Silicon suboxide | Silicon suboxide | Silicon suboxide | Silicon suboxide | Silicon suboxide | Silicon suboxide | Silicon suboxide |
| | | Thickness d ($\mu$m) | 3 | 3 | 2 | 16 | 3 | 3 | 3 | 2 | 3 | 3 | 4 | 5 |
| | | Particle size ($\mu$m) | 1 | 1 | 1 | 1 | 1 | 1 | 1 | 1 | 1 | 1 | 1 | 1 |
| | | Gram capacity m1 (mAh/g) | 2350 | 2350 | 3280 | 355 | 2350 | 2350 | 2350 | 2350 | 2350 | 2350 | 2350 | 2350 |
| | | Density $\rho$ (g/cm$^3$) | 1.82 | 1.82 | 1.85 | 1.80 | 1.82 | 1.82 | 1.82 | 1.82 | 1.82 | 1.82 | 1.82 | 1.82 |
| | Capacity of positive electrode B1 (mAh/cm$^2$) | | 2.38 | 2.38 | 2.38 | 2.38 | 238 | 2.38 | 2.38 | 14 | 2.1 | 2.S | 35 | 4.2 |
| Positive electrode plate | Capacity of positive electrode A1 (mAh/cm$^2$) | | 34 | 3.4 | 3.4 | 3.4 | 3.4 | 3.4 | 3.4 | 2 | 3 | 4 | 5 | 6 |
| | B1/A1 | | 0.70 | 0.70 | 0.70 | 0.70 | 0.70 | 0.70 | 0.70 | 0.70 | 0.70 | 0.70 | 0.70 | 0.70 |
| Battery performance | Volumetric energy density (Wh/L) | | 651.3 | 651.3 | 658.6 | 579.6 | 651.3 | 635 6 | 628.2 | 647.2 | 649.8 | 667.2 | 685.2 | 695.2 |
| | Cycle life (cycle) | | 1222 | 1211 | 1232 | 1210 | 1210 | 1214 | 1241 | 1233 | 1214 | 1209 | 1219 | 1205 |
| | Capacity loss rate (%) | | 20 | 20 | 20 | 20 | 20 | 20 | 20 | 20 | 20 | 20 | 20 | 20 |

[Table 3]

| | | | Comparative Example 1 | Comparative Example 2 | Comparative Example 3 | Comparative Example 4 | Comparative Example 5 | Comparative Example 6 |
|---|---|---|---|---|---|---|---|---|
| Negative electrode plate | | Material type | none | Boehmite | none | none | Boehmite | none |
| | | Thickness (μm) | - | 2 | - | - | 2 | - |
| | | Particle size (μm) | - | 0.3 | - | - | 0.3 | - |
| | Reaction layer | Material type | none | none | Silicon suboxide | none | none | Silicon suboxide |
| | | Thickness d (μm) | - | - | 4 | - | - | 4 |
| | | Particle size (μm) | - | - | 1 | - | - | 1 |
| | | Gram capacity m1 (mAh/g) | - | - | 2350 | - | - | 2350 |
| | | Density ρ (g/cm³) | - | - | 1.82 | - | - | 1.82 |
| | | Capacity of positive electrode B1 (mAh/cm²) | 3.74 | 3.74 | 3.74 | 2.38 | 2.38 | 2.38 |
| | | Capacity of positive electrode A1 (mAh/cm²) | 34 | 3.4 | 3.4 | 3.4 | 3.4 | 3.4 |
| | | B1/A1 | 1.1 | 1.1 | 1.1 | 0.70 | 0.70 | 0.70 |
| | | Volumetric energy density (Wh/L) | 561.8 | 551.2 | 532.4 | 685.5 | 669.1 | 6586 |
| Battery performance | | Cycle life (cycle) | 2093 | 2047 | 823 | Failed after internal short-circuit at 327th cycle | Failed after internal short-circuit at 532th cycle | 746 |
| | | Capacity loss rate (%) | 20 | 20 | 20 | - | - | 20 |

According to the above results, it can be seen that the examples show good performances in terms of volumetric energy density and cycle life. In contrast, in the comparative examples, both the volumetric energy density and the cycle life cannot be achieved simultaneously. Specifically, in Comparative Examples 1 to 3, the effect of the insulation layer and the reaction layer as the value of B1/A1 is greater than 1 has been investigated, and in Comparative Examples 4 and 5, the effect of the insulation layer and the reaction layer as the value of B1/A1 is less than 1 has been investigated. By comparison with Comparative Example 1, it can be seen that in Comparative Example 4, when the value of B1/A1 is reduced, the volumetric energy density can be improved, but the cycle life is extremely poor when the insulation layer and the reaction layer are not provided. As can be seen from Comparative Example 5, when only the insulation layer is provided without providing the reaction layer, the cycle life is still poor. As can be seen from Comparative Example 6, when only the reaction layer is provided without providing the insulation layer, the cycle life is greatly improved, but the cycle life is still shorter than that of Example 11 in which both the reaction layer and the insulation layer are provided. From this, it can be seen that by providing the reaction layer and the insulation layer on the negative electrode plate, the synergistic effect of greatly improving the safety can be achieved.

**Claims**

1.  A secondary battery (5) comprising a positive electrode plate and a negative electrode plate,

    wherein the negative electrode plate comprises a negative electrode current collector (500) and a negative electrode active material layer (501) provided on at least one surface of the negative electrode current collector (500),
    an insulation layer (502) and a reaction layer (503) are sequentially provided on the surface of the negative electrode active material layer (501) on the side opposite to the negative electrode current collector (500) side,
    and the reaction layer (503) comprises at least one of graphite, silicon, silicon oxide, silicon suboxide, tin oxide, copper oxide, and zinc oxide,
    and when the capacity of the positive electrode active material layer per unit area in the positive electrode plate is denoted as A1 (mAh/cm$^2$), and the capacity of the negative electrode active material layer (501) per unit area in the negative electrode plate is denoted as B1 (mAh/cm$^2$), B1/A1 < 1, optionally $0.3 \leq$ B1/A1 < 1.

2.  The secondary battery (5) according to claim 1, wherein
    the insulation layer (502) comprises at least one of aluminum oxide, boehmite, zirconium oxide, titanium oxide, magnesium oxide, cobalt oxide, nickel oxide, gallium oxide, germanium oxide, yttrium oxide, strontium oxide, barium oxide, and molybdenum oxide.

3.  The secondary battery (5) according to claim 1 or 2, wherein
    the battery satisfies that:

$$\frac{\left(\dfrac{A1-B1}{m1}\right) \times 10000}{\rho} - 15 \leq d \leq \frac{\left(\dfrac{A1-B1}{m1}\right) \times 10000}{\rho} + 20$$

    d: the thickness of the reaction layer (503), in $\mu$m;
    A1: the capacity of the positive electrode active material per unit area of the positive electrode plate, in mAh/cm$^2$;
    B1: the capacity of the negative electrode active material per unit area of the negative electrode plate, in mAh/cm$^2$;
    m1: the gram capacity of the reaction layer (503), in mAh/g;
    $\rho$: the density of the reaction layer (503), in g/cm$^3$.

4.  The secondary battery (5) according to any one of claims 1-3, wherein the gram capacity m1 of the reaction layer (503) satisfies m1 $\geq$ 150 mAh/g; optionally, 1000 mAh/g $\leq$ m1 $\leq$ 2500 mAh/g.

5.  The secondary battery (5) according to any one of claims 1-4, wherein the density $\rho$ of the reaction layer (503) satisfies 0.2 g/cm$^3$ $\leq \rho \leq$ 3 g/cm$^3$, optionally 1 g/cm$^3$ $\leq \rho \leq$ 2 g/cm$^3$.

6.  The secondary battery (5) according to any one of claims 1-5, wherein

the thickness of the reaction layer (503) is 1 $\mu$m-30 $\mu$m, optionally 2 $\mu$m-30 $\mu$m; and/or,
the thickness of the insulation layer (502) is 1 $\mu$m-10 $\mu$m, optionally 2 $\mu$m-4 $\mu$m.

7. The secondary battery (5) according to any one of claims 1-6, wherein
the Young's Modulus of the insulation layer (502) is greater than or equal to 6 GPa, optionally 6 GPa -30 GPa.

8. The secondary battery (5) according to any one of claims 1-7, wherein

the particle size of the material in the reaction layer (503) is 0.1 $\mu$m-4 $\mu$m, optionally 0.1 $\mu$m-0.8 $\mu$m; and/or,
the particle size of the material in the insulation layer (502) is 0.1 $\mu$m-10 $\mu$m, optionally 0.1 $\mu$m-4 $\mu$m.

9. The secondary battery (5) according to any one of claims 1-8, wherein
the capacity B1 of the negative electrode active material layer (501) per unit area in the negative electrode plate is 0.3 mAh/cm$^2$-7 mAh/cm$^2$; optionally, 1 mAh/cm$^2$-5 mAh/cm$^2$.

10. The secondary battery (5) according to any one of claims 1-9, wherein
the capacity A1 of the positive electrode active material layer per unit area in the positive electrode plate is 1 mAh/cm$^2$-7 mAh/cm$^2$; optionally, 2 mAh/cm$^2$-5 mAh/cm$^2$.

11. A battery module (4) comprising the secondary battery (5) according to any one of claims 1-10.

12. A battery pack (1) comprising the battery module (4) according to claim 11.

13. A power consuming device comprising at least one selected from the secondary battery (5) according to any one of claims 1-10, the battery module (4) according to claim 11 or the battery pack (1) according to claim 12.

**Patentansprüche**

1. Sekundärbatterie (5), die eine positive Elektrodenplatte und eine negative Elektrodenplatte aufweist,

wobei die negative Elektrodenplatte einen Stromkollektor für die negative Elektrode (500) und eine Aktivmaterialschicht (501) für die negative Elektrode aufweist, die auf zumindest einer Oberfläche des Stromkollektors (500) für die negative Elektrode vorgesehen ist,
eine Isolationsschicht (502) und eine Reaktionsschicht (503) nacheinander auf der Oberfläche der Aktivmaterialschicht (501) für die negative Elektrode auf der Seite gegenüberliegend der Seite des Stromkollektors (500) der negativen Elektrode vorgesehen sind,
und die Reaktionsschicht (503) Graphit und/oder Silizium und/oder Siliziumoxid und/oder Siliziumsuboxid und/oder Zinnoxid und/oder Kupferoxid und/oder Zinkoxid aufweist,
und wenn die Kapazität der Aktivmaterialschicht der positiven Elektrode pro Flächeneinheit in der positiven Elektrodenplatte als A1 (mAh/cm$^2$) bezeichnet wird und die Kapazität der Aktivmaterialschicht der negativen Elektrode (501) pro Flächeneinheit in der negativen Elektrodenplatte als B1 (mAh/cm$^2$) bezeichnet wird, B1/A1< 1, optional 0,3 ≤ B1/A1 < 1.

2. Sekundärbatterie (5) nach Anspruch 1, wobei
die Isolierschicht (502) Aluminiumoxid und/oder Böhmit und/oder Zirkoniumoxid und/oder Titanoxid und/oder Magnesiumoxid und/oder Kobaltoxid und/oder Nickeloxid und/oder Galliumoxid und/oder Germaniumoxid und/oder Yttriumoxid und/oder Strontiumoxid und/oder Bariumoxid und/oder Molybdänoxid umfasst.

3. Sekundärbatterie (5) nach Anspruch 1 oder 2, wobei die Batterie die folgenden Bedingungen erfüllt:

$$\frac{\left(\dfrac{A1-B1}{m1}\right)}{\rho} \times 10000 - 15 \leq d \leq \frac{\left(\dfrac{A1-B1}{m1}\right)}{\rho} \times 10000 + 20$$

d: die Dicke der Reaktionsschicht (503), in $\mu$m;

A1: die Kapazität des Aktivmaterials der positiven Elektrode pro Flächeneinheit der positiven Elektrodenplatte, in mAh/cm$^2$;
B1: die Kapazität des Aktivmaterials der negativen Elektrode pro Flächeneinheit der negativen Elektrodenplatte, in mAh/cm$^2$;
m1: die Grammkapazität der Reaktionsschicht (503), in mAh/g;
$\rho$: die Dichte der Reaktionsschicht (503) in g/cm$^3$.

4. Sekundärbatterie (5) nach einem der Ansprüche 1-3, wobei die Grammkapazität m1 der Reaktionsschicht (503) m1$\geq$ 150 mAh/g erfüllt; optional 1000 mAh/g $\leq$m1$\leq$ 2500 mAh/g.

5. Sekundärbatterie (5) nach einem der Ansprüche 1-4, wobei die Dichte $\rho$ der Reaktionsschicht (503) 0,2 g/cm$^3$:$\leq \rho$ $\leq$ 3 g/cm$^3$, optional 1 g/cm$^3$$\leq \rho \leq$2 g/cm$^3$.

6. Sekundärbatterie (5) nach einem der Ansprüche 1-5, wobei
die Dicke der Reaktionsschicht (503) 1 $\mu$m-30 $\mu$m, optional 2 $\mu$m-30 $\mu$m, beträgt;
und/oder die Dicke der Isolierschicht (502) 1 $\mu$m-10 $\mu$m, optional 2 $\mu$m-4 $\mu$m, beträgt.

7. Sekundärbatterie (5) nach einem der Ansprüche 1-6, wobei
der Elastizitätsmodul der Isolierschicht (502) größer gleich 6 GPa, optional 6 GPa - 30 GPa ist.

8. Sekundärbatterie (5) nach einem der Ansprüche 1-7, wobei
die Teilchengröße des Materials in der Reaktionsschicht (503) 0,1 $\mu$m-4 $\mu$m, optional 0,1 $\mu$m-0,8 $\mu$m beträgt;
und/oder die Teilchengröße des Materials in der Isolierschicht (502) 0,1 $\mu$m-10 $\mu$m, optional 0,1 $\mu$m-4 $\mu$m beträgt.

9. Sekundärbatterie (5) nach einem der Ansprüche 1-8, wobei
die Kapazität B1 der der Aktivmaterialschicht der negativen Elektrode (501) pro Flächeneinheit in der negativen Elektrodenplatte 0,3 mAh/cm$^2$- 7 mAh/cm$^2$ beträgt; optional 1 mAh/cm$^2$-5 mAh/cm$^2$.

10. Sekundärbatterie (5) nach einem der Ansprüche 1-9, wobei
die Kapazität A1 der Aktivmaterialschicht der positiven Elektrode pro Flächeneinheit in der positiven Elektrodenplatte 1 mAh/cm$^2$ - 7 mAh/cm$^2$ beträgt; optional 2 mAh/cm$^2$-5 mAh/cm$^2$.

11. Batteriemodul (4) , aufweisend die Sekundärbatterie (5) nach einem der Ansprüche 1-10.

12. Batteriepack (1), aufweisend das Batteriemodul (4) nach Anspruch 11.

13. Strom verbrauchende Vorrichtung, die zumindest eines aufweist, das ausgewählt ist aus der Sekundärbatterie (5) nach einem der Ansprüche 1-10, dem Batteriemodul (4) nach Anspruch 11 oder dem Batteriepack (1) nach Anspruch 12.

**Revendications**

1. Batterie secondaire (5) comprenant une électrode plane positive et une électrode plane négative, dans laquelle

l'électrode plane négative comprend un collecteur de courant (500) d'électrode négative et une couche de matière active (501) d'électrode négative disposée sur au moins une surface du collecteur de courant (500) d'électrode négative,
une couche d'isolation (502) et une couche de réaction (503) sont disposées successivement sur la surface de la couche de matière active (501) d'électrode négative sur le côté opposé au côté du collecteur de courant (500) d'électrode négative,
et la couche de réaction (503) comprend au moins un des constituants suivants :
graphite, silicium, oxyde de silicium, suboxyde de silicium, oxyde d'étain, oxyde de cuivre et oxyde de zinc,
et lorsque la capacité de la couche de matière active d'électrode positive par unité de surface dans l'électrode plane positive est indiquée par A1 (mAh/cm$^2$), et la capacité de la couche de matière active (501) d'électrode négative par unité de surface dans l'électrode plane négative est indiquée par B1 (mAh/cm$^2$), B1/A1 < 1, éventuellement 0,3 $\leq$ B1/A1 < 1.

**2.** La batterie secondaire (5) selon la revendication 1, dans laquelle
la couche d'isolation (502) comprend au moins un des constituants suivants : oxyde d'aluminium, boehmite, oxyde de zirconium, dioxyde de titane, oxyde de magnésium, oxyde de cobalt, oxyde de nickel, oxyde de gallium, oxyde de germanium, oxyde d'yttrium, oxyde de strontium, oxyde de baryum et oxyde de molybdène.

**3.** La batterie secondaire (5) selon les revendications 1 ou 2, dans laquelle
la batterie satisfait à l'inégalité suivante :

$$\frac{\left(\dfrac{A1-B1}{m1}\right) \times 10000}{\rho} - 15 \leq d \leq \frac{\left(\dfrac{A1-B1}{m1}\right) \times 10000}{\rho} + 20$$

d : l'épaisseur de la couche de réaction (503), en $\mu$m ;
A1 : la capacité de la matière active d'électrode positive par unité de surface de l'électrode plane positive, en mAh/cm$^2$ ;
B1 : la capacité de la matière active d'électrode négative par unité de surface de l'électrode plane négative, en mAh/cm$^2$ ;
m1 : la capacité gramme de la couche de réaction (503), en mAh/g ;
$\rho$ : la densité de la couche de réaction (503), en g/cm$^3$.

**4.** La batterie secondaire (5) selon l'une quelconque des revendications 1-3, dans laquelle la capacité gramme m1 de la couche de réaction (503) satisfait à m1 $\geq$ 150 mAh/g ; éventuellement à 1000 mAh/g < m1 $\leq$ 2500 mAh/g.

**5.** La batterie secondaire (5) selon l'une quelconque des revendications 1-4, dans laquelle la densité $\rho$ de la couche de réaction (503) satisfait à 0,2 g/cm$^3$ $\leq$ $\rho$ $\leq$ 3 g/cm$^3$, éventuellement à 1 g/cm$^3$ $\leq$ $\rho$ $\leq$ 2 g/cm$^3$.

**6.** La batterie secondaire (5) selon l'une quelconque des revendications 1-5, dans laquelle

l'épaisseur de la couche de réaction (503) est de 1 $\mu$m-30 $\mu$m, éventuellement de 2 $\mu$m-30 $\mu$m ; et/ou
l'épaisseur de la couche d'isolation (502) est de 1 $\mu$m-10 $\mu$m, éventuellement de 2 $\mu$m-4 $\mu$m.

**7.** La batterie secondaire (5) selon l'une quelconque des revendications 1-6, dans laquelle
le module d'élasticité de Young de la couche d'isolation (502) est supérieur ou égal à 6 GPa, éventuellement de 6 GPa-30 GPa.

**8.** La batterie secondaire (5) selon l'une quelconque des revendications 1-7, dans laquelle

la taille des particules du matériau dans la couche de réaction (503) est de 0,1 $\mu$m-4 $\mu$m, éventuellement de 0,1 $\mu$m-0,8 $\mu$m ; et/ou
la taille des particules du matériau dans la couche d'isolation (502) est de 0,1 $\mu$m-10 $\mu$m, éventuellement de 0,1 $\mu$m-4 $\mu$m.

**9.** La batterie secondaire (5) selon l'une quelconque des revendications 1-8, dans laquelle
la capacité B1 de la couche de matière active (501) d'électrode négative par unité de surface dans l'électrode plane négative est de 0,3 mAh/cm$^2$-7 mAh/cm$^2$ ; éventuellement de 1 mAh/cm$^2$-5 mAh/cm$^2$.

**10.** La batterie secondaire (5) selon l'une quelconque des revendications 1-9, dans laquelle
la capacité A1 de la couche de matière active d'électrode positive par unité de surface dans l'électrode plane positive est de 1 mAh/cm$^2$-7 mAh/cm$^2$ ; éventuellement de 2 mAh/cm$^2$-5 mAh/cm$^2$.

**11.** Module (4) de batterie comprenant la batterie secondaire (5) selon l'une quelconque des revendications 1-10.

**12.** Bloc-batterie (1) comprenant le module (4) de batterie selon la revendication 11.

**13.** Dispositif consommateur d'énergie comprenant au moins un élément choisi parmi la batterie secondaire (5) selon l'une quelconque des revendications 1-10, le module (4) de batterie selon la revendication 11 et le bloc-batterie (1) selon la revendication 12.

*FIG. 1*

(a)

(b)

*FIG. 2*

**5**

*FIG. 3*

**5**

*FIG. 4*

**4**

*FIG. 5*

1

FIG. 6

1

2

4  4  4

4

4

4

3

FIG. 7

FIG. 8